# EUROPÄISCHE PATENTSCHRIFT

(11) **EP 1 117 943 B1**
(45) Veröffentlichungstag und Bekanntmachung des Hinweises auf die Patenterteilung: **20.10.2004**
(21) Anmeldenummer: 00935216.2
(22) Anmeldetag: 16.06.2000
(51) Int. Cl.: F16D 69/02

(54) **VERFAHREN ZUR HERSTELLUNG VON BREMSSCHEIBEN AUS KERAMIKTEILEN MIT METALLNABEN UND EINE BREMSSCHEIBE HERSTELLBAR NACH DEM VERFAHREN**
METHOD FOR PRODUCING BRAKE DISKS CONSISTING OF CERAMIC PARTS WITH METAL HUBS AND A BRAKE DISK OBTAINABLE BY THE METHOD
PROCEDE DE PRODUCTION DE DISQUES DE FREINS COMPOSES D'ELEMENTS CERAMIQUE ET DOTES D'UN MOYEU METALLIQUE ET UN DISQUE DE FREIN PREPARABLE PAR LE PROCEDE

(30) Priorität: 25.06.1999 DE 19929358
(43) Veröffentlichungstag der Anmeldung: 25.07.2001
(73) Patentinhaber: SGL CARBON AG, 65203 Wiesbaden (DE)
(72) Erfinder: GRUBER, Udo, D-86356 Neusäss (DE); HEINE, Michael, D-86695 Allmannshofen (DE); KIENZLE, Andreas, D-86672 Thierhaupten (DE)
(74) Vertreter: Deckers, Hellmuth, Dr.
(86) Internationale Anmeldenummer: PCT/EP2000/005548
(87) Internationale Veröffentlichungsnummer: WO 2001/001009

(56) Entgegenhaltungen:
- WO-A-97/38235
- WO-A-98/09092
- US-A- 5 620 791

## Beschreibung

An Hochleistungsbremsen werden heute die folgenden Anforderungen gestellt: Sie müssen hohe (kinetische) Energien in kurzer Zeit in Wärmeenergie umwandeln, sie dürfen auch unmittelbar nach einem Bremsvorgang (d. i. meist in heißem Zustand) nicht wesentlich an Effizienz verlieren, der Kraftschluß zur Fahrzeugachse muß den hohen Drehmomenten bei der Verzögerung standhalten,

Gleichzeitig besteht die Forderung, die Bremseinheit möglichst leicht zu machen, um das Trägheitsmoment der Antriebs- bzw. Verzögerungsachse möglichst gering zuhalten. Es wird auch angestrebt, die Werkstoffpaarung für Bremsscheiben und Bremsbacken so zu wählen, daß die leichter austauschbaren Bremsbacken den größeren Verschleiß in der Paarung zeigen.

Die meisten Hochleistungs-Bremsen werden heute in Form von Scheibenbremsen ausgeführt, wobei die Bremsscheibe meist aus Stahl oder Gußeisen besteht. Bei Bremsen, bei denen Arbeitstemperaturen von ca. 250 bis ca. 600 °C auftreten (z. B. Formel I-Rennwagen oder Flugzeuge), sind bereits mit Erfolg Bremsscheiben aus mit Carbonfasern verstärktem Kohlenstoff eingesetzt worden. Dies Material wird bei höheren Temperaturen jedoch oberflächlich oxidiert und zeigt daher ungünstige Dauergebrauchseigenschaften. Günstiger verhält sich bekannterweise (WO 97/022815) ein Keramik-Verbundmaterial aus Siliciumcarbid als Matrix, die mit einem Netzwerk aus Carbonfasern verstärkt ist. Dabei wird die hohe Formbeständigkeit und Steifigkeit der Carbonfaser kombiniert mit den günstigen Verschleißeigenschaften von Siliciumcarbid, insbesondere auch dessen hervorragender Oxidationsbeständigkeit und thermischen Eigenschaften. In dieser Anmeldung wird beschrieben, daß Segmente aus diesem keramischen Verbundmaterial zur benötigten Form geschliffen werden und dann auf einem Stahlträger zwischen Nabe und Speichen fixiert werden. Aus der US-A 5,620,791 sind Verbundwerkstoffe mit Matrices aus Metall oder Keramik bekannt, die als Bremsscheiben eingesetzt werden können, und die durch Infiltration von flüssigem Metall in einen mit gehärtetem Polymer gebundenen Füllstoff hergestellt werden. Aus der WO-A 97/38235 Bremsscheiben und Beläge für Motorfahrzeuge bekannt, wobei geformte Keramikbeläge auf die Oberfläche von Metallbremsteilen aufgebracht werden. In der WO-A 98/09092 sind entsprechend hergestellte Kupplungsscheiben bekannt.

Die Bearbeitung von Keramik, insbesondere von Keramik-Verbundmaterialien ist aufwendig und läßt sich nur schwierig zur Herstellung größerer Stückzahlen automatisieren.

Es bestand daher die Aufgabe, ein Verfahren bereitzustellen, mit dem eine Serienfertigung von Bremsscheiben ermöglicht wird, die keramische Teile, insbesondere keramische Verbundmaterialien als Reibflächen aufweisen.

Diese Aufgabe wurde gelöst durch ein Verfahren zur Herstellung von Bremsscheiben mit Reibflächen aus keramischen Materialien, insbesondere Verbundmaterialien, wobei mindestens ein Keramikteil in eine Druckgußform eingelegt wird und durch Vergießen unter einem Druck von ca. 5 bis ca. 500 bar mit geschmolzenen Metallen zu einem rotationssymmetrischen Körper gefügt wird, der mindestens ein Keramik-Verbund-Segment enthält, das symmetrisch zur Drehachse des Metallkörpers angeordnet ist, und über mindestens eine zur Achse senkrechte Fläche des Metallkörpers hinausragt. Dabei ist die Lage der Keramik-Elemente in der Form so zu wählen, daß die (Symmetrie-)Achse der Form und eine Zone um diese Achse mit einem Radius, der mindestens 1/10 und bevorzugt höchstens 2/3 des Radius der fertigen Bremsscheibe beträgt, frei von keramischen Teilen ist.

Wesentlich für die Bemessung dieser Zone um die Achse ist, daß das durch die Bremsverzögerung bewirkte Drehmoment auf die Drehachse übertragen werden kann.

Bevorzugt wird der zentrale (Symmetrieachsen-nahe) Teil, die Nabe, in Form eines Topfes ausgeführt.

Die keramischen Teile können beliebige Querschnitte aufweisen, ihre Anzahl beträgt mindestens 1, besonders bevorzugt 2 bis 80, insbesondere 4 bis 40. Die Teile müssen symmetrisch zur Drehachse angeordnet sein, wobei auch unterschiedlich große oder unterschiedlich geformte Teile gleichzeitig eingesetzt werden können, solange für mindestens jeweils zwei der Teile die Symmetriebedingung erfüllt ist bzw. ein Teil selbst rotationssymmetrisch ist. Es ist jedoch bevorzugt, daß alle keramischen Teile gleichgroß sind. Die Querschnitte der keramischen Teile können kreis-, ellipsen- oder keilförmig sein, es können jedoch auch rechteckige oder trapezförmige Querschnitte verwendet werden.

Als Keramikmaterialien können prinzipiell alle bekannten Materialien eingesetzt werden; auf Grund der Temperaturbeanspruchung werden jedoch solche Materialien bevorzugt, die bei den beim Bremsvorgang auftretenden hohen Temperaturen nicht oxydativ geschädigt werden, und die auch bei diesen Temperaturen noch eine ausreichende Härte aufweisen. Solche Materialien sind insbesondere faserverstärkte Keramiken, bevorzugt Keramiken, die mit Carbonfasern oder Metall-Whiskern verstärkt sind. Auf Grund der günstigen thermischen Eigenschaften, ihrer hohen Härte und wegen ihrer chemischen Beständigkeit sind Siliciumcarbid und andere nichtoxidische Keramiken wie Siliciumnitrid besonders bevorzugt. Hervorragend geeignet sind die unterschiedlichen Siliciumcarbid-Keramiken, wie RSiC (Rekristallisiertes Siliciumcarbid), SSiC (gesintertes SiC) und SiSiC (Silicium-infiltriertes Siliciumcarbid), insbesondere Kohlenstoffaser-verstärktes SiC (C/SiC).

Das als Träger und Krafteintragsteil benutzte Metall muß bei einer Temperatur schmelzen, die unterhalb der Zersetzungstemperatur der Keramik liegt, es muß eine ausreichende Torsionssteifigkeit auch bei erhöhter Temperatur besitzen, un die benötigte Kraft in die Bremsscheibe einzuleiten, seine thermische Ausdehnung sollte sich nicht zu sehr von der der Keramik unterscheiden, und es darf die Keramik nicht (chemisch) angreifen. Geeignet ist beispielsweise Aluminium sowie Aluminiumlegierungen mit Massenanteilen von mindestens 40% Aluminium in der Legierung, in Verbindung mit einer Keramik aus carbonfaserverstärktem siliciuminfilitriertem Siliciumcarbid.

Die Herstellung der Bremsscheiben erfolgt in der Weise, daß Keramiksegmente mit Hilfe geeigneter Bestückungsvorrichtungen symmetrisch in eine Druckgußform eingesetzt werden. In diese Form wird dann das geschmolzene Metall bei einem Druck von ca. 5 bis ca. 500 bar eingespritzt. Es ist vorteilhaft, die Druckgußform dabei vorzuwärmen. Nach dem Erstarren des Metalls wird die Form wie üblich geöffnet, das Bauteil entnommen und erneut mit den keramischen Einlegeteilen bestückt, wonach der Einspritzvorgang erneut vorgenommen werden kann. Das abgekühlte Bauteil kann dann, soweit dies nötig ist, nachbearbeitet werden.

Wird nur ein Keramik-Teil verwendet, so ist dies rotationssymmetrisch, bevorzugt ringförmig. Bevorzugt weist der Ring an der achsennahen Seite einzelne Elemente auf, bevorzugt mindestens zwei solche Elemente, die Vor- oder Rücksprünge in Richtung auf die Drehachse sind. Über diese Elemente wird der Kraftschluß zwischen Keramik und Metall verbessert. Es ist im Rahmen der Erfindung auch möglich, zwei oder mehr solcher Ringscheiben durch ein achsennahes Metallteil in dem beschriebenen Druckgußverfahren zu verbinden. Bei dieser Ausführungsform hat es sich als günstig erwiesen, zwischen den beiden Scheiben zusätzlich zu der bereits beschriebene Topfnabe solche Metallelemente auszubilden, die im Sinne eines Propellers oder Impellers einen Luftstrom zwischen den beiden Scheiben erzeugen, der die beim Bremsen entstehende Verlustwärme rascher abführt.

Die Erfindung wird durch die folgenden Beispiele erläutert:

### Beispiel 1

Es wurden 36 keilförmige C/SiC-Segmente (1 = ca. 65 mm, b = ca. 18/ca. 10,6 mm, h =32 mm) von Hand in eine Druckgußform eingelegt. In der Druckgußform waren geometrisch passende Aussparungen mit einer Tiefe von 10 mm für diese Segmente vorgesehen in der Art, daß die einzelnen Segmente einen segmentierten Kreis mit einem Außendurchmesser von 320 mm und einem Innendurchmesser von 190 mm ausbilden. Zwischen den einzelnen Segmenten war ein Spalt von 10 mm Breite ausgebildet. Diese Spalten wurden im nachfolgenden Druckguß-Vorgang mit einer Aluminiumlegierung (Al-Si12Fe) gefüllt, was zu einer Einbindung der einzelnen Segmente in eine 12 mm dicke Al-Trägerstruktur und damit zur Ausbildung des Reibringes unter gleichzeitiger Verknüpfung diese Reibringes mit einem ebenfalls während des Druckgußvorganges ausgebildeten Topfes aus dieser Al-Legierung führt. Um den Druckguß durchzuführen, wurde die Gußform auf 300 °C aufgewärmt. Anschließend wurde die Al-Legierung, die auf eine Temperatur von 680 °C vorgewärmt wurde, unter einem Druck von ca. 50 bar in die Gußform eingespritzt. Nach dem Erstarren der Schmelze wurde die Reibeinheit entformt und nach dem Abkühlen aufRaumtemperatur bearbeitet, d.i. die Reiboberfläche wurde geschliffen.

### Beispiel 2

Es wurde ein C/SiC-Ringsegment mit einem Außendurchmesser von 320 mm und einem Innendurchmesser von 190 mm von Hand in eine Druckgußform überführt. Am Innenring dieser Ringform befanden sich 10 mm lange Zacken. Überdiese Zacken erfolgt die Anbindung des Topfes im nachfolgenden Druckguß. Dabei wurden diese Zacken mit der Legierungsschmelze umschlossen.

Um den Druckguß durchzuführen, wurde die Gußform auf 300 °C aufgewärmt. Anschließend wurde die Al-Legierung, die auf die Temperatur von ca. 680 °C vorgewärmt wurde, unter einem Druck von ca. 50 bar in die Gußform eingespritzt. Nach dem Erstarren der Schmelze wurde die Reibeinheit entformt und nach dem Abkühlen auf Raumtemperatur bearbeitet, d.i. oberflächlich geschliffen.

## Patentansprüche

1. Verfahren zur Herstellung von Bremsscheiben mit Reibflächen aus keramischen Materialien, insbesondere Verbundmaterialien, wobei mindestens ein Keramikteil in eine Druckgußform eingelegt wird und durch Vergießen unter einem Druck von 5 bis 500 bar mit geschmolzenen Metallen zu einem rotationssymmetrischen Körper gefügt wird, der mindestens ein Keramik-Verbund-Segment enthält, das symmetrisch zur Drehachse des Metallkörpers angeordnet ist, und über mindestens eine zur Achse senkrechte Fläche des Metallkörpers hinausragt, und wobei die Keramik-Verbund-Segmente so angeordnet werden, daß eine Zone um die Drehachse mit einem Radius von mindestens 1/10 des Radius der Bremsscheibe frei von keramischen Teilen ist.

2. Verfahren nach Anspruch 1, **dadurch gekennzeichnet, daß** eine Ringscheibe aus Keramik eingesetzt wird.

3. Verfahren nach Anspruch 1, **dadurch gekennzeichnet, daß** mindestens zwei Keramikteile eingesetzt werden, die als parallele Ringscheiben ausgebildet sind.

4. Verfahren nach einem der Ansprüche 2 oder 3, **dadurch gekennzeichnet, daß** die Ringscheiben Vorsprünge zur Achse hin oder Einschnitte von der Achse abgewandt aufweisen, die den Kraftschluß zwischen Metall und Keramik verbessern.

5. Verfahren nach Anspruch 1, **dadurch gekennzeichnet, daß** der achsennahe Teil des Metalls als Topfnabe ausgeführt ist.

6. Verfahren nach Anspruch 3, **dadurch gekennzeichnet, daß** zwischen den beiden Scheiben Metallteile angeordnet werden, die die Wirkung eines Propellers oder eines Impellers haben und einen Luftstrom zwischen den beiden Scheiben hervorrufen, der die Scheiben im Sinne einer Innenbelüftung kühlt

7. Bremsscheibe umfassend mindestens ein Keramik-Verbund-Segment und eine Nabe, herstellbar nach dem Verfahren gemäß Anspruch 1.

8. Bremsscheibe nach Anspruch 7, **dadurch gekennzeichnet, daß** das Keramik-Verbund-Segmente die Form einer Ringscheibe hat.

9. Bremsscheibe nach Anspruch 7, **dadurch gekennzeichnet, daß** mindestens zwei Keramik-Elemente enthalten sind, die als parallele Ringscheiben ausgebildet sind.

10. Bremsscheibe nach Anspruch 9, **dadurch gekennzeichnet, daß** zwischen den beiden Keramik-Elementen in Form von Ringscheiben Metallteile in Form eines Propellers oder Impellers angeordnet sind.

## Claims

1. Method for the production of brake discs having friction surfaces made of ceramic materials, in particular composite materials, wherein at least one ceramic portion is placed in a diecasting mould and as a result of casting under a pressure of 5 to 500 bar with molten metals is joined to a rotationally symmetrical body which contains at least one ceramic-composite segment that is arranged symmetrically with respect to the axis of rotation of the metal body and projects beyond at least one surface of the metal body that is perpendicular to the axis, and wherein the ceramic-composite segments are arranged so that a zone around the axis of rotation with a radius of at least 1/10 of the radius of the brake disc is free of ceramic portions.

2. Method according to claim 1, **characterised in that** an annular disc made of ceramic material is used.

3. Method according to claim 1, **characterised in that** at least two ceramic portions are used that are formed as parallel annular discs.

4. Method according to one of claims 2 or 3, **characterised in that** the annular discs have projections directed towards the axis or notches facing away from the axis that improve the frictional connection between the metal and ceramic material.

5. Method according to claim 1, **characterised in that** the portion of the metal that is close to the axis is constructed as a hub pot.

6. Method according to claim 3, **characterised. in that** metal portions are arranged between the two discs that have the effect of a propeller or an impeller and give rise to an air current between the two discs that cools the discs for the purposes of internal ventilation.

7. Brake disc comprising at least one ceramic-composite segment and a hub, producible in accordance with the method according to claim 1.

8. Brake disc according to claim 7, **characterised in that** the ceramic-composite segment has the form of an annular disc.

9. Brake disc according to claim 7, **characterised in that** at least two ceramic elements are contained that are formed as parallel annular discs.

10. Brake disc according to claim 9, **characterised in that** metal portions in the form of a propeller or an impeller are arranged between the two ceramic elements that are in the form of annular discs.

## Revendications

1. Procédé pour la fabrication de disques de frein avec des surfaces de friction en matériaux céramiques, en particulier en matériaux composites, dans lequel au moins une partie en céramique est placée dans un moule de coulée sous pression et est assemblée à un corps à symétrie de rotation par coulée sous une pression de 5 à 500 bars avec des métaux fondus, lequel corps comprend au moins un segment de matériau composite-céramique qui est disposé symétriquement à l'axe de rotation du corps métallique et qui fait saillie sur au moins une surface du corps métallique perpendiculaire à l'axe, et moyennant quoi les segments de matériau composite-céramique sont disposés de telle manière qu'une zone autour de l'axe de rotation ayant un rayon d'au moins 1/10 du rayon du disque de frein est exempte de parties en céramique.

2. Procédé selon la revendication 1, **caractérisé en ce que** l'on utilise un disque annulaire en céramique.

3. Procédé selon la revendication 1, **caractérisé en ce que** l'on utilise au moins deux parties de céramique qui sont configurées comme des disques annulaires parallèles.

4. Procédé selon l'une quelconque des revendications 2 ou 3, **caractérisé en ce que** les disques annulaires présentent des saillies dirigées vers l'axe ou des creux opposés à l'axe qui améliorent l'adhérence entre le métal et la céramique.

5. Procédé selon la revendication 1, **caractérisé en ce que** la partie du métal proche de l'axe est configurée comme un moyeu en pot.

6. Procédé selon la revendication 3, **caractérisé en ce que** des parties métalliques, qui agissent comme une hélice ou une turbine et qui provoquent un courant d'air entre les deux disques qui refroidit les disques à la manière d'un refroidissement intérieur, sont disposées entre les deux disques.

7. Disque de frein comprenant au moins un segment de matériau composite-céramique et un moyeu, qui peut être fabriqué suivant le procédé selon la revendication 1.

8. Disque de frein selon la revendication 7, **caractérisé en ce que** le segment de matériau composite-céramique a la forme d'un disque annulaire.

9. Disque de frein selon la revendication 7, **caractérisé en ce qu'**il comprend au moins deux éléments de céramique qui sont configurés comme des disques annulaires parallèles.

10. Disque de frein selon la revendication 9, **caractérisé en ce que** des parties métalliques sous forme d'une hélice ou d'une turbine sont disposées entre les deux éléments de céramique sous forme de disques annulaires.
